# EUROPEAN PATENT APPLICATION

(11) **EP 1 001 625 A2**
(43) Date of publication of application: **17.05.2000**
(21) Application number: 99308971.3
(22) Date of filing: 11.11.1999
(51) Int. Cl.: H04N 5/913

(54) **Method and apparatus for controlling digital data**

(30) Priority: 13.11.1998 JP 32416998
(71) Applicant: INTERNATIONAL BUSINESS MACHINES CORPORATION, Armonk, NY 10504 (US); NEC CORPORATION, Tokyo (JP)
(72) Inventor: Miwa, Kunihiko, Yamato-shi, Kanagawa (JP); Tanaka, Kazuyoshi, Minato-ku, Tokyo (JP); Matsushiba, Takuji, Yamato-shi, Kanagawa (JP)
(74) Representative: Tothill, John Paul

(57) **Abstract**

A method of controlling data copying or playback and an apparatus therefor, which does not require an additional information detector in a drive that has severe constraints on its cost and/or space. For the recording control, from digital data, any additional information electronically embedded therein is detected (310) and, if such additional information is detected, then access control of the digital data is performed using the additional information. Next, the digital data is scrambled for recording the same onto a medium (320). Note that the term "electronically embedded additional information" means herein such additional information that is embedded through a transformation of the data itself. Also, the term "access control" means herein to determine whether copying/recording of the digital data is to be stopped or continued. Depending on a content of the additional information, the term "access control" also embraces to embed control information such as a copy mark into the digital data. For playback control (330), the scrambled digital data is descrambled, thereby to detect any electronically embedded additional information and copy mark from the descrambled digital data. Using such detected information, playback control of the digital data is performed.

## Description

This invention relates to a technique for embedding additional information (such as a digital watermark) into digital contents or data for copyright protection thereof, whereby a video recorder, a reproducer or the like may detect such embedded additional information for use in control (management) of recording and playback of such digital contents. More specifically, this invention relates to a method and an apparatus, which use the digital watermarking and scrambling (or encryption) techniques, for managing recording and playback of such digital contents.

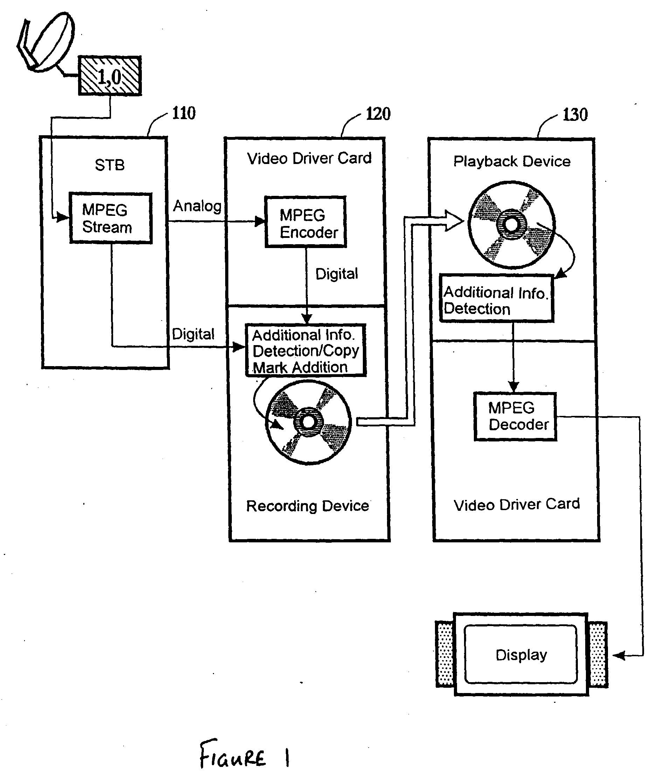

As one of the methods of providing the safest and most powerful control function for copyright protection of digital data, there is the access control method of data that uses the so-called digital watermarking. Digital watermarking is a technique for electronically embedding additional information into digital data (contents). Such additional information is embedded through a transformation of data itself. That is, digital data and additional information are unified or integrated together and, thus, it is difficult to separate one from the other. In this respect, Japanese Patent Application 8-273551 discloses a prior technique for performing access control of data using this digital watermarking. More particularly, in Japanese Patent Application 8-273551, an additional information detector (digital watermark detector) is provided in a drive such as DVD for detecting such additional information from various MPEG streams and for performing access control using the same. Fig. 1 shows its schematic configuration. An STB (Set-Top Box) 110 supplies signals, which may be in analog or digital form, to a video recorder (recorder) 120. In case of feeding an MPEG stream from the STB 110, this MPEG stream is directly sent to the additional information detector in the video recorder 120. On the other hand, if an output of the STB 110 is in the analog form, this analog output is sent to an MPEG encoder in a video driver card for converting it into a digital signal, which is then sent to the additional information detector. This additional information detector detects any additional information and copy mark information embedded in the contents and, in accordance with the information, performs a variety of predetermined control with respect to the video recorder 120 and a playback machine (player) 130. By way of example, the following items of control are performed.

In a recording device, detection of a digital watermark is performed and, based on this, the following copying control operations are performed (Note that a symbol "CM" below stands for a copy mark).
(1,0) and absence of CM: Add a CM and passes the stream (authorize or permit video recording).
(1,0) and presence of CM: Stop the stream or video recording.
(1,1): Stop the stream or video recording.
(0,0) or absence of detected additional information: Permit video recording.

In a playback device, detection of a digital watermark is performed and, based on this, the following playback control operations are performed.
(1,0) and absence of CM: Prohibit playback.
(1,0) and presence of CM: Prohibit playback for a read-only disk, whereas permit playback for a write-once disk or a writable disk.
(1,1): Permit playback for a read-only disk, whereas prohibit playback for a write-once disk or a writable disk.
(0,0) or absence of detected additional information: Permit playback.

As described, Japanese Patent Application 8-273551 provides some copying control techniques, as well as playback management techniques adapted for respective types of media. However, in accordance with this prior approach, it is necessary to provide the additional information detector in a drive (i.e., in a recording device or a playback device). This is because, in order to secure copyright protection, it is mandatory to provide the additional information detector at the reading nucleus of the video recorder 120, even though the video recorder 120 has severe constraints on its cost and/or space. Also, it is necessary to detect a digital watermark from a variety of MPEG streams, which inevitably leads to upsizing of the detector. Further, in order to know in the playback machine 130 that the current contents have been copied, it is necessary to know information about types of the media (e.g., read-only, write-once and writable) that are subject to reading. Accordingly, what is needed is a new copyright protection scheme using digital watermarking, which is free of aforesaid problems.

It is, therefore, an object of this invention to provide a method of control data copying or playback and an apparatus therefor, which does not require an additional information detector in a drive that has severe constraints on its cost and/or space.

It is another object of this invention to provide a method of controlling data copying or playback and an apparatus therefor, which use an additional information detector of a smaller size.

It is yet another object of this invention to provide a method of controlling data copying or playback and an apparatus therefor, which does not require to know information about types of the media for playback control.

It is yet another object of this invention to provide a method of controlling data copying or playback and a system therefor, which use effectively combined digital watermarking and scrambling techniques.

To accomplish said objects, the recording control is performed as set forth below. First, from digital data, any additional information electronically embedded therein is detected and, if such additional information is detected, then access management of the digital data is performed using the additional information. Next, the digital data is scrambled for recording the same onto a medium. Note that the term "electronically embedded additional information" means herein such additional information that is embedded through a transformation of the data itself. Also, the term "access control" means herein to determine whether copying/recording of the digital data is to be stopped or continued. Depending on a content of the additional information, the term "access control" also embraces to embed control information such as a copy mark into the digital data.

Next, in case of playback control, the scrambled digital data is descrambled, thereby to detect any electronically embedded additional information and copy mark from the descrambled digital data. Using such detected information, playback control of the digital data is performed.

In accordance with this invention, there is provided a method of controlling data copying or playback and an apparatus therefor, which use effectively combined digital watermarking and scrambling techniques. As a result, there is no need to provide an additional information detector in a drive that has severe constraints on its cost and/or space. Further, it becomes possible to prevent a compliant source from being digitally recorded and/or digitally played back at a recorder and/or a player in a non-compliant device respectively.

Preferred embodiments of the present invention will now be described by way of example only, with reference to the accompanying drawings, in which:
Fig. 1 is a diagram showing a prior scheme for performing access control of data;
Fig. 2 is a schematic diagram showing an apparatus of this invention for performing recording and playback of digital data;
Fig. 3 is another schematic diagram showing an apparatus of this invention for performing recording and playback of digital data;
Fig. 4 is a diagram showing paths of a signal, which is subject to prohibition of processing, and a medium in the prior scheme;
Fig. 5 is a diagram showing paths of a signal, which is subject to prohibition of processing, and a medium in accordance with the scheme of this invention;
Fig. 6 is an exemplary flow chart for recording/copying control.
Fig. 7 is an exemplary flow chart for playback management;
Fig. 8 is a block diagram showing a more detailed configuration of the apparatus for digital watermarking and scrambling; and
Fig. 9 is a block diagram showing a more detailed configuration of the apparatus for descrambling and detection of additional information.

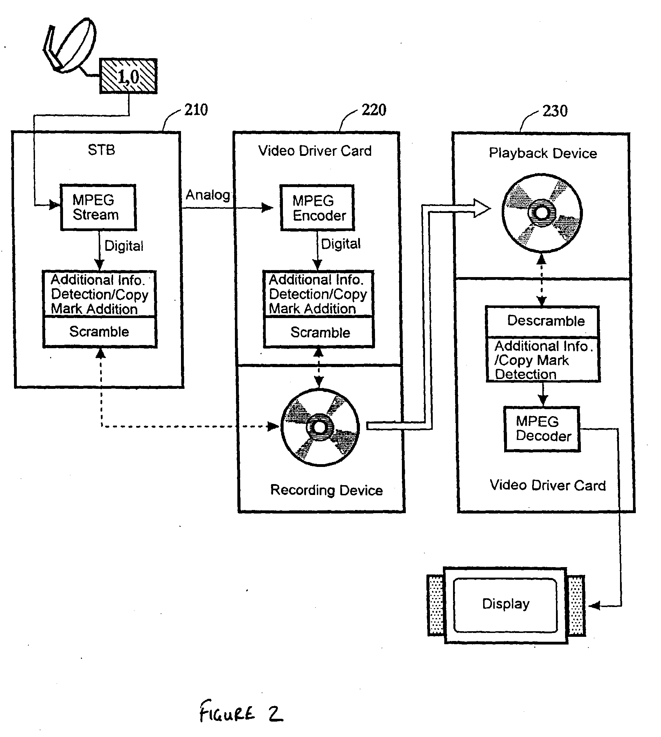

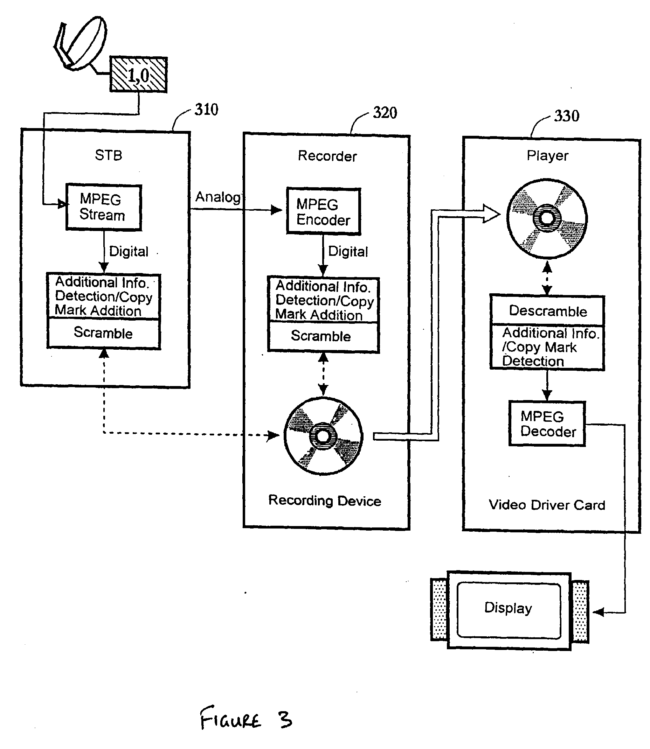

Figs. 2 and 3 show schematic configurations of apparatuses of this invention for performing recording/playback of the digital data. While Fig. 2 shows an application of this invention to a video driver card primarily used in a personal computer in such a manner that a card is separated from a drive, Fig. 3 shows another application of this invention to a digital recorder (recorder) and a digital player (player) as representative electric home appliances in such a manner that a card and a drive are integrated together.

In Fig. 2, there are two different signal flows involved. That is, in the first signal flow, a signal inputted into an STB 210 is fed from an analog output of the STB 210 to a video driver card of a recorder 220. Whereas in the second signal flow, detection of additional information, addition of a copy mark and scrambling are performed in the STB 210 and, then, the scrambled digital data is directly fed to a drive of the recorder 220. When an analog signal is inputted to the video driver card, it is converted to a digital data by an MPEG encoder such that detection of additional information, addition of a copy mark and scrambling are subsequently performed. The digital data so scrambled is recorded onto a medium by the recorder 220. This medium is then conveyed to a player 230 for its playback. Note that the recorder 220 and player 230 are described herein to be separate machines, but they may be configured as a single machine. The latter approach would be more general than the former. The medium conveyed to the player 230 is subject to a reading operation. The digital data read from the medium is then inputted to a video driver card such that its descrambling, detection of the additional information and addition of a copy mark (if required) are subsequently performed. Finally, the digital data is decoded by an MPEG decoder.

In Fig. 3, there are two different signal flows involved. That is, in the first signal flow, a signal inputted into an STB 310 is fed from an analog output of the STB 310 to a recorder 320. Whereas in the second signal flow, detection of additional information, addition of a copy mark and scrambling are performed in the STB 310 and, then, the scrambled digital data is directly fed to a drive of the recorder 320. When an analog signal is inputted to the recorder 320, it is converted to a digital data by an MPEG encoder such that detection of additional information, addition of a copy mark and scrambling are subsequently performed. The digital data so scrambled is recorded onto a medium by a recording device. This medium is then conveyed to a player 330 for its playback. Note that the recorder 320 and player 330 are described herein to be separate machines, but they may be configured as a single machine. The latter approach would be more general than the former. The medium conveyed to the player 330 is subject to a reading operation. The digital data read from the medium is then inputted to a video driver card such that its descrambling, detection of the additional information and addition of a copy mark (if required) are subsequently performed. Finally, the digital data is decoded by an MPEG decoder.

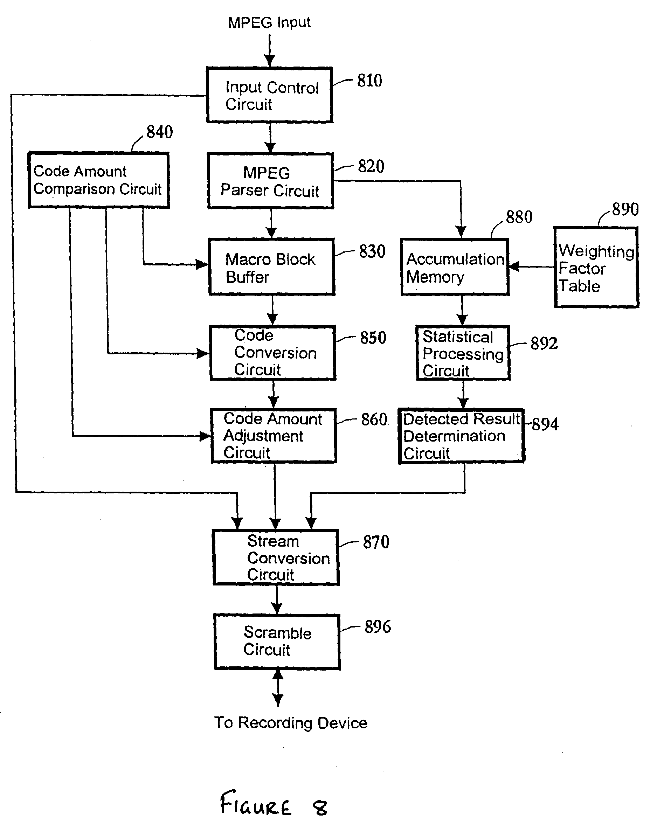

Fig. 8 is a block diagram, which shows a more detailed configuration of the recorder 320 or STB adapted for use in digital watermarking and scrambling. Block 810 is an input control circuit block for receiving an MPEG stream and passing the MPEG stream to a stream conversion circuit and an MPEG parser circuit. Block 820 is the MPEG parser circuit block for extracting from the MPEG stream those portions that are required by the next stage. Block 830 is a macro block buffer for storing a macro block that is necessary for embedding control information. Block 840 is a code amount comparison circuit block for calculating and comparing code lengths in a macro block. Block 850 is a code conversion circuit block for converting a code to be used for embedding the control information. Block 860 is a code amount adjustment circuit block for adjusting a code length to be identical to its value before the conversion and for forming the result as an embedding conversion table. Block 870 is a stream conversion circuit block for stopping/converting/passing the MPEG stream as it is based on a detected result of additional information. Block 880 is an accumulation memory for accumulating those values of DCT factors derived by the MPEG parser circuit that are multiplied by weighting factors. Block 890 is a table of the weighting factors for correlating with additional information contained in the inputted MPEG image. Block 892 is a statistical processing circuit block for performing statistical processing of the values stored in the accumulation memory. Block 897 is a detected result determination circuit block for determining a value of embedded additional information from its preceding stage and for issuing an indication to the stream conversion circuit. Block 896 is a scramble circuit block for performing authentication with a recording device and for scrambling such stream that is found to contain the additional information.

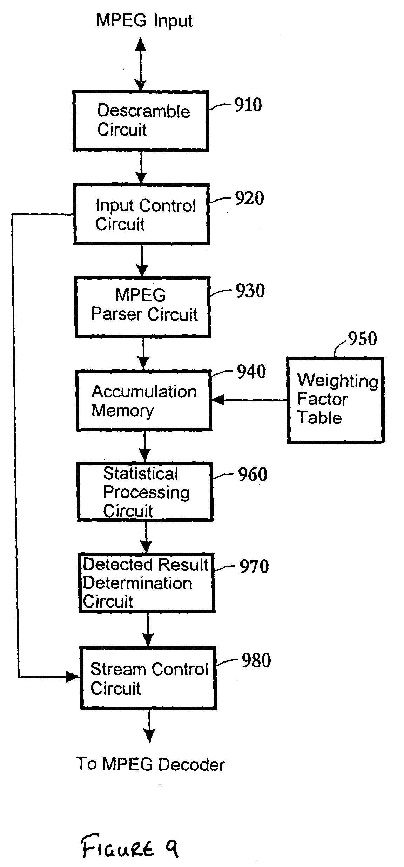

Fig. 9 is a block diagram, which shows a more detailed configuration of the player 330 adapted for use in descrambling and detection of the additional information. Block 910 is a descramble circuit block for authenticating an inputted digital signal with a playing device and for descrambling the digital signal. Block 920 is an input control circuit block for receiving the MPEG stream and passing the MPEG stream to a stream control circuit and an MPEG parser circuit. Block 930 is the MPEG parser circuit block for extracting from the MPEG stream those portions that are required by the next stage. Block 940 is an accumulation memory for accumulating those values of DCT factors derived by the MPEG parser circuit that are multiplied by weighting factors. Block 950 is a table of the weighting factors for correlating with additional information contained in the inputted MPEG image. Block 960 is a statistical processing circuit block for performing statistical processing of the values stored in the accumulation memory. Block 970 is a detected result determination circuit block for determining a value of embedded additional information from its preceding stage and for issuing an indication to the stream control circuit. Block 980 is the stream control circuit for stopping/passing the MPEG stream as it is based on the detected result of additional information.

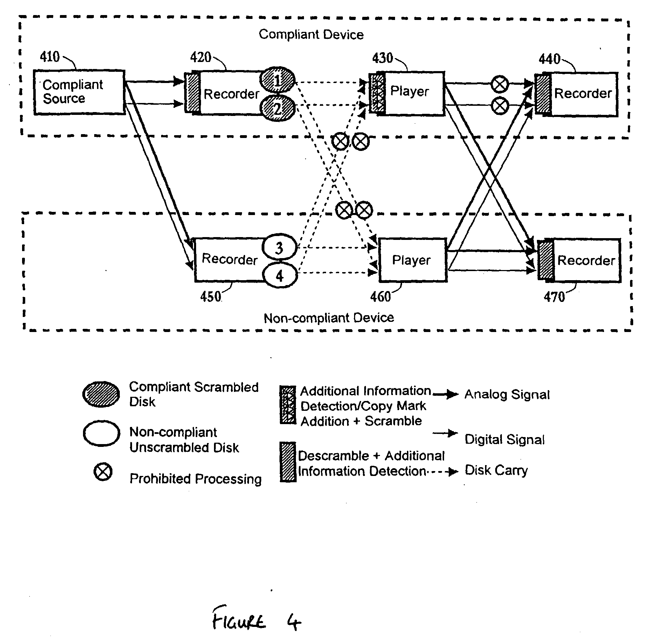

Fig. 4 shows paths of a signal, which is subject to prohibition of processing, and a medium in the prior scheme. In a compliant device (a device in accordance with the prior scheme), a compliant source (a source in accordance with the prior scheme) 410 is smoothly processed in a recorder 420 and/or player 430, but no further recording can be performed in a recorder 440. Note, however, in this respect that in such an operation combined with a non-compliant device, it is possible to perform an illegal recording/playback operation. By way of example, if the compliant source 410 is digitally inputted to a recorder 450 in the non-compliant device, it is not only possible to perform its digital recording but also its playback in a player 460. Further, if a digital output of the player 430 in the compliant device is inputted to a recorder 470 in the non-compliant device, it becomes possible to perform its recording as well.

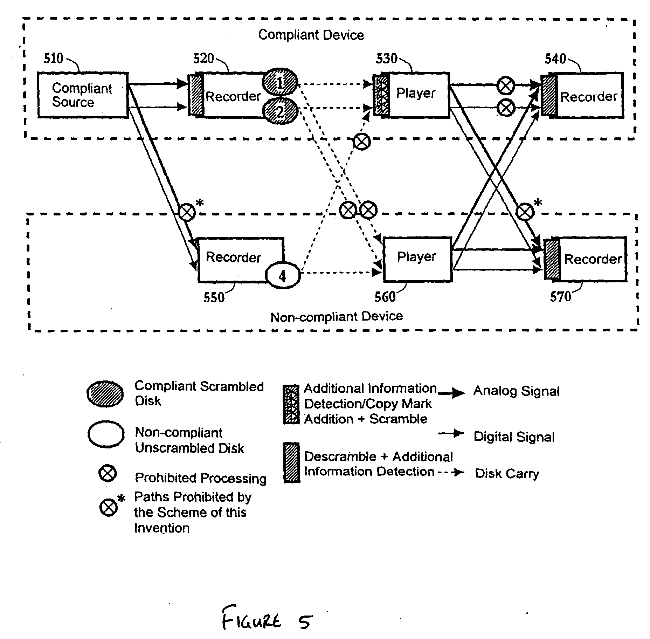

Fig. 5 shows paths of a signal, which is subject to prohibition of processing, and a medium in accordance with the scheme of this invention. In a compliant device (a device in accordance with the scheme of this invention), a compliant source (a source in accordance with the scheme of this invention) 510 is smoothly processed in a recorder 520 and/or player 530, but no further recording can be performed in a recorder 540. Here, operations combined with a non-compliance device will be considered briefly. First, even if it is intended to digitally input the compliant source 510 to a recorder 550 in the non-compliant device, such inputting is prohibited and, thus, there will be no way to perform its digital recording. Also, it becomes possible to prohibit inputting of a digital output of the player 530 in the compliant device to a recorder 570 in the non-compliant device.

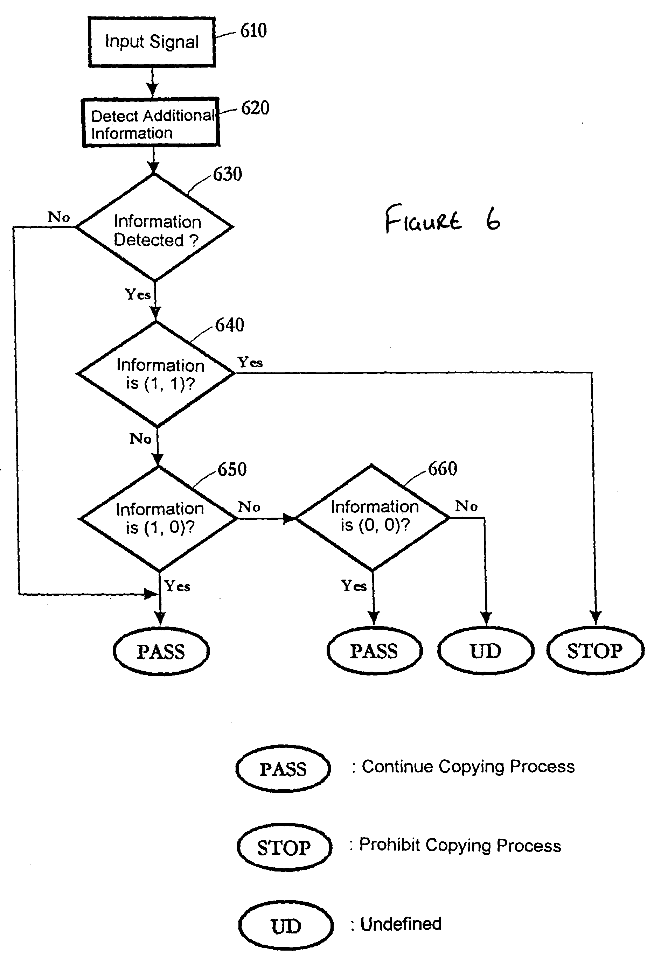

Fig. 6 shows an exemplary flow chart for recording/copying control. At step 610, digital data such as an MPEG stream is inputted, and at step 620, detection of any electronically embedded additional information is performed. At step 630, it is determined whether or not the additional information is detected, and if not, the stream is passed as it is. If the determination at step 630 is "YES", then at step 640, it is determined whether or not the additional information is (1,1), and if so, the stream is not passed. At the same time, scrambling or video recording is stopped. If the additional information is not (1,1), then at step 650, it is determined whether or not the additional information is (1,0). If this result is "YES", the stream is passed as it is. If the result of step 650 is "NO", then at step 660, it is determined whether or not the additional information is (0,0). If this result is "YES", then the stream is passed as it is. Otherwise, this means that the additional information is (0,1), which cannot possibly exist in any event and, thus, the additional information is determined to be undefined. Instead of doing this, however, the stream may be prohibited on an assumption that such abnormality has been caused by an erroneous bit change in the medium or another abnormality that occurred during embedding. The passed stream is subsequently scrambled for recording the same onto a medium. While said scrambling is a means for enciphering, it may be such scrambling based on an encryption key for improving robustness. Using such scrambling by an encryption key, there is no way to decode the scrambled digital data in the absence of the key and, thus, it becomes possible to distribute the digital contents in a safer manner.

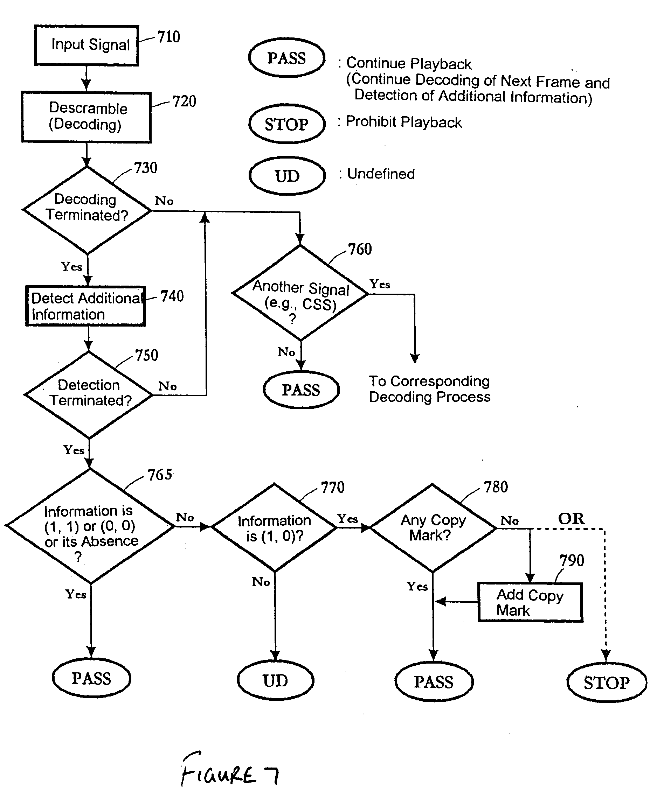

Fig. 7 shows an exemplary flow chart for playback control. At step 710, digital data is inputted, and at step 720, descrambling (decoding) of the scrambled digital data is performed. At step 730, it is determined whether or not the decoding is terminated, and if so, the process proceeds to step 740. If the result at step 730 is "NO", then at step 760, it is determined whether or not another encryption technique such as CSS (Content Scramble System) has been applied. Note here that CSS is a scrambling technique for a read-only disk. If the result at step 760 is "YES", the corresponding decoding process is performed. Otherwise, the present playback is continued. After performing detection of the additional information at step 740, then at step 750, it is determined whether or not the detection is terminated. If this result is "NO", the process proceeds to step 760. On the other hand, if the result of step 750 is "YES", the process proceeds to step 765. At step 765, it is determined whether the detected additional information is (1,1) or (0,0) or absence of the additional information. If this result is "YES", the playback is continued. On the other hand, if this result is "NO", then at step 770, it is determined whether or not the additional information is (1,0). If this result is "NO", the additional information is deemed to be undefined. However, if this result is "YES", then the process proceeds to step 780. At step 780, it is determined whether or not there exists a copy mark, and if so, the playback is continued. On the other hand, if this result is "NO", then at step 790, a copy mark is added and the playback is continued. In this case, i.e., if the result of step 780 is "NO", the playback may be alternatively stopped.

Incidentally, in a case where the digital data cannot be correctly descrambled (i.e., the digital data has not been scrambled), it may be alternatively processed as set forth below. For example, if the additional information is (1,0) and there is no copy mark, the stream is stopped and its descrambling or playback is stopped. Also, if the additional information is (1,1) and there is a copy mark, the stream is stopped and its descrambling or playback is stopped. Further, if the additional information is (1,1), the stream, its descrambling and/or playback is stopped. Finally, if the additional information is (1,1) or there is no additional information at all, the playback is permitted.

Further, as another embodiment of playback control, for those scrambled contents of a read-only disk such as CSS, its playback may be permitted on a condition that CSS is successfully descrambled. More particularly, if CSS is successfully descrambled, it is possible to avoid detection of any digital watermark. Alternatively, if CSS is successfully descrambled, it is possible to permit playback on a condition that the additional information of (1,1) is detected. Further, by adding an scheme that allows to perform descrambling using proximately detected digital watermarking information and/or additional information as a key, or to perform subsequent descrambling using such digital watermarking information that is detected after the initial descrambling, it is possible to strengthen the protection function of scrambling and yet to cause detection of a digital watermark to be mandatory. In order to protect copying of scrambled digital data, by using such scrambling with an encryption key, it becomes possible to disable its playback even though its copying is done. Moreover, for those contents that are not subject to any copyright protection, it is also possible to avoid scrambling and/or embedding additional information therein, and to similarly apply descrambling in such a manner that any information to be displayed within a display unit such as a TV set is scrambled or additional information is detected, without departing the spirit of this invention.

## Claims

1. A method of recording digital data onto a medium, comprising the steps of:
(a) detecting from digital data any additional information electronically embedded therein;
(b) if said additional information is detected, then performing access control for the digital data using said additional information;
(c) scrambling the digital data; and
(d) recording the scrambled digital data onto a medium.

2. The method of claim 1, wherein said step (b) comprises a step of determining whether copying/recording of the digital data is to be stopped or continued.

3. The method of claim 2, wherein said step (b) further comprises a step of embedding a copy mark into the digital data in accordance with a content of said additional information.

4. A method of performing playback management of digital data recorded onto a medium, comprising the steps of:
(a) descrambling scrambled digital data;
(b) detecting from the digital data any additional information and copy mark electronically embedded therein; and
(c) performing playback control of the digital data using said additional information and copy mark.

5. The method of claim 1 or 4, wherein said electronically embedded additional information comprises such additional information that is embedded through a transformation of the data itself.

6. A video driver card for creating digital data, comprising:
(a) an encoder for receiving analog data and outputting digital data;
(b) means for detecting any additional information electronically embedded in the digital data;
(c) means for adding a copy mark to said additional information in accordance with said additional information; and
(d) means for scrambling the digital data with said additional information.

7. The video driver card of claim 6, wherein said digital data is an MPEG stream, and wherein said encoder is an MPEG encoder.

8. A video driver card (230) for decoding digital data, comprising:
(a) means for descrambling scrambled digital data;
(b) means for detecting from the digital data any additional information and copy mark electronically embedded therein; and
(c) means for performing playback control of the digital data using said additional information and copy mark.

9. The video driver card (230) of claim 8, wherein said digital data is an MPEG stream, and wherein said means (c) comprises means for determining whether or not outputting of an MPEG stream is to be performed and for outputting a desired MPEG stream.

10. The video driver card (230) of claim 6 or 8, wherein said electronically embedded additional information comprises such additional information that is embedded through a transformation of the data itself.

11. The video driver card (230) of claim 9, wherein said means (c) further comprises means for adding a copy mark to the digital data in accordance with said additional information and copy mark and for outputting the digital data.

12. A recorder (320) for recording digital data onto a medium, comprising:
(a) an encoder for receiving analog data and outputting digital data;
(b) means for detecting any additional information electronically embedded in the digital data;
(c) means for adding a copy mark to said additional information in accordance with said additional information; and
(d) means for scrambling the digital data; and
(e) means for recording the scrambled digital data onto a medium.

13. The recorder (320) of claim 12, wherein said digital data is an MPEG stream, and wherein said encoder is an MPEG encoder.

14. The recorder (320) of claim 12, wherein said electronically embedded additional information comprises such additional information that is embedded through a transformation of the data itself.

15. A player (330) for playing back digital data recorded onto a medium, comprising:
(a) means for reading the digital data from the medium;
(b) means for descrambling the digital data;
(c) means for detecting from the digital data any additional information and copy mark electronically embedded therein; and
(d) means for performing playback control of the digital data using said additional information and copy mark.

16. The player (330) of claim 15, wherein said digital data is an MPEG stream, and wherein said means (d) comprises means for determining whether or not outputting of an MPEG stream is to be performed and for outputting a desired MPEG stream.

17. The player (330) of claim 15, wherein said electronically embedded additional information comprises such additional information that is embedded through a transformation of the data itself.

18. The player (330) of claim 16, wherein said means (d) further comprises means for adding a copy mark to the digital data in accordance with said additional information and copy mark and for outputting the digital data.
